# EUROPEAN PATENT SPECIFICATION

(11) **EP 3 048 054 B1**
(45) Date of publication and mention of the grant of the patent: **25.04.2018**
(21) Application number: 14846419.1
(22) Date of filing: 11.08.2014
(51) Int. Cl.: B65B 51/16, B65B 57/00, B65B 57/10, B29C 65/18, B29C 65/30, B29C 65/74, B29C 65/00, B65B 51/30, B65B 51/26, B65B 9/207, B65B 9/20

(54) **PACKAGING MACHINE**
VERPACKUNGSMASCHINE
MACHINE D'EMBALLAGE

(30) Priority: 20.09.2013 JP 2013195983
(43) Date of publication of application: 27.07.2016
(73) Proprietor: Ishida Co., Ltd., Kyoto-shi, Kyoto 606-8392 (JP)
(72) Inventor: YASUDA, Takahiro, Ritto-shi Shiga 520-3026 (JP); ICHIKAWA, Makoto, Ritto-shi Shiga 520-3026 (JP); HASHIMOTO, Satoshi, Ritto-shi Shiga 520-3026 (JP); KOIKE, Shinji, Ritto-shi Shiga 520-3026 (JP)
(74) Representative: Global IP Europe Patentanwaltskanzlei
(86) International application number: PCT/JP2014/071168
(87) International publication number: WO 2015/040977

(56) References cited:
- EP-A1- 0 661 212
- EP-A1- 1 050 469
- WO-A1-2013/108202
- JP-A- H05 139 417
- JP-A- H07 187 153
- JP-A- H11 165 714
- JP-A- H11 165 714
- JP-A- 2000 289 719
- JP-A- 2006 321 549
- JP-A- 2007 191 197

## Description

### TECHNICAL FIELD

The present invention relates to a packaging machine, and particularly relates to a packaging machine in which a pair of sealing members sandwiches and seals portions of a film.

### BACKGROUND ART

In the past, there have been packaging machines with sealing means which use sealing members to sandwich and seal a packaging material. For example, Patent Literature 1 (Japanese Laid-open Patent Application No. 2007-302261) and Patent Literature 2 (Japanese Laid-open Patent Application No. H3-69428) disclose a packaging machine which uses sealing members driven by a servo motor to sandwich and heat-seal a packaging material shaped into a tubular shape, and thereby packages goods to be packaged.

With this type of packaging machine, when the packaging material is sandwiched and sealed by the sealing members, sometimes the goods to be packaged or the like get trapped in the sealed portions and the package is thereby incompletely sealed.

Patent Literature 1 (Japanese Laid-open Patent Application No. 2007-302261) discloses the feature that the drive current of the servo motor, or in other words, the torque of the servo motor, is measured, and when the drive current exceeds a predetermined value, the sealed portions are determined to have trapped a foreign object and a poor seal is detected. Patent Literature 2 (Japanese Laid-open Patent Application No. H3-69428) discloses the feature that the rotational angle of the servo motor is measured, and presence of objects in the sealed portions are detected based on a delay from the target position of the rotational position.

EP 1 050 469 A1 discloses a packaging machine in which a pair of sealing members is configured to be rotated in a circular orbit, whereby the sealing members sandwich and laterally seal a sealed portion of a film along a direction intersecting a first direction, the film being formed into a tubular shape and conveyed in the first direction, the packaging machine comprising: a first support part configured to support one of the sealing members; a second support part configured to support the other of the sealing members; an entrapment determination part configured to determine whether or not articles are present in the sealed portion based on the relative movement amount; wherein the first support part is movable in a direction toward or away from the second support part.

### SUMMARY OF THE INVENTION

### Technical Problem

In some packaging machines, a separate mechanism is used instead of a servo motor as the drive source for sandwiching the packaging material between the sealing members. For example, there are cases in which the mechanism used as the drive source cannot perceive the force/moment exerted on the packaging material by the drive source and positional information pertaining to the drive source (e.g., the rotational angle of the motor, etc.), directly from information obtained from the drive source. In such cases, it is not possible to detect the presence of articles trapped in the sealed portions based on the information obtained from the drive source.

One object of the present invention is to provide a packaging machine which uses sealing members to sandwich and seal a packaging material, wherein the presence of articles trapped in the sealed portions can be detected even when the mechanism used as the drive source of the sealing members is incapable of causing the force/moment exerted on the packaging material by the drive source and positional information pertaining to the drive source, to be directly perceived from information obtained from the drive source.

### <Solution to Problem>

In a packaging machine according to the present invention, a pair of sealing members is configured to sandwich and seal a sealed portion of a film. The packaging machine is provided with a first support part configured to support one of the sealing members and a second support part configured to support the other of the sealing members, a movement amount detector, and an entrapment determination part. The movement amount detector is configured to measure the relative movement amount of the first support part in relation to the second support part in an approaching direction or a moving away direction, when the first support part and the second support part approach or move away. The entrapment determination part is configured to determine whether or not articles are present in the sealed portion based on the relative movement amount.

In this aspect, the presence of articles trapped in the sealed portion can be detected even when the mechanism, used as the drive source for driving the sealing members, is incapable of perceiving the force/moment exerted on the film by the drive source via the sealing members and positional information pertaining to the drive source (e.g., the rotational angle of the motor, etc.), directly from information obtained from the drive source.

In the packaging machine according to the present invention, the pair of sealing members is configured to be rotated in a circular orbit, whereby the sealing members sandwich and laterally seal the film along a direction intersecting a first direction, the film being formed into a tubular shape and conveyed in the first direction.

In this aspect, in a packaging machine using a rotating lateral sealing mechanism, the presence of articles trapped in the sealed portion during lateral sealing can be detected.

In the packaging machine according to the present invention, the first and second support parts are preferably rotating shafts to rotate the sealing members.

In this aspect, in the packaging machine using a rotating lateral sealing mechanism, the presence of articles trapped in the sealed portion during lateral sealing can be detected by measuring the relative movement amount of the rotating shafts for rotating the sealing members.

One possible method for detecting the presence of articles trapped in the sealed portion is a method of measuring the relative movement amount of one sealing member in relation to the other sealing member. However, when the movement amount of sealing members to be rotated in a circular orbit is measured, the configuration for measuring the movement amount is likely to be complicated. In this aspect, because the relative movement amount of the rotating shafts for rotating the sealing members is measured, the presence of articles trapped in the sealed portion can be detected with a simpler configuration than it is detected by measuring the movement amount of the sealing members.

The packaging machine according to the present invention is preferably further provided with a fluid-pressure-utilizing pressing mechanism. The fluid-pressure-utilizing pressing mechanism is preferably configured to constantly press the first support part toward the second support part so that the film is to be pressed between the sealing members when the film is sandwiched between the pair of sealing members.

The presence of articles trapped in the sealed portion can be detected even when an inexpensive fluid-pressure-utilizing pressing mechanism, which does not itself perceive the force/moment or the like exerted on the film, is used in order to apply pressure to the film between the sealing members.

In the packaging machine according to the present invention, each of the first and second support parts is preferably configured to support the sealing member at a first-end side and a second-end side in the longitudinal direction of a surface with which the sealing members sandwich the film. The movement amount detector is preferably configured to measure, as the relative movement amount, a first relative movement amount of the first support part in relation to the second support part at the first-end side, and a second relative movement amount of the first support part in relation to the second support part at the second-end side. The entrapment determination part is preferably configured to determine whether or not articles are present in the sealed portion based on the first relative movement amount and the second relative movement amount.

In this aspect, when the first and second support parts support the sealing members at both ends in the longitudinal direction of the surfaces with which the sealing members sandwich the film, the relative movement amounts of the first support part in relation to the second support part in the respective ends are used in the determination of the presence of trapped articles. It is therefore easy to perceive that articles have been trapped regardless of the location in which they have been trapped in the sealed portion.

In the packaging machine according to the present invention, the entrapment determination part is preferably configured to determine whether or not articles are trapped in the sealed portion based on statistics of the relative movement amount measured during a predetermined time period by the movement amount detector.

In this aspect, erroneous detection of the presence of trapped articles is minimized or eliminated, even if there is momentarily a comparatively large measurement error in the relative movement amount measured by the movement amount detector.

Furthermore, in the packaging machine according to the present invention, the entrapment determination part is preferably configured to determine whether or not articles are present in the sealed portion based on an average value of the relative movement amount measured during a predetermined time period by the movement amount detector.

In this aspect, erroneous detection of the presence of trapped articles is minimized or eliminated even if there is momentarily a comparatively large measurement error in the relative movement amount measured by the movement amount detector, because the presence of trapped articles are determined based on the average value of the relative movement amount.

In the packaging machine according to the present invention, the pair of sealing members are preferably configured to be rotated in a circular orbit, whereby the sealing members sandwich and laterally seal the film along a direction intersecting a first direction sequentially from the forward side in the first direction, the film being formed into a tubular shape and conveyed in the first direction. The entrapment determination part is preferably configured to determine whether or not articles are present in the sealed portion, both in a first time period beginning at a start of a sealing action by the sealing members and ending at a first time point and in a second time period beginning at a second time point after the first time point and ending at a finish of the sealing action, within the single sealing action.

In the packaging machine using a rotating lateral sealing mechanism, the determination of the presence of trapped articles is performed separately at the sealing action starting time and the sealing action finishing time, within one sealing action. Therefore, when bags are being packaged continuously, a determination of the presence of trapped articles of one-end side of one bag and a determination of the presence of trapped articles of the other-end side of the following bag can be performed separately. It is thereby easy to detect only bags in which caching of articles is actually caused.

In the packaging machine according to the present invention, the second support part is secured so as not to move in a direction toward or away from the first support part. The first support part is movable in a direction toward or away from the second support part. The movement amount detector is configured to measure the movement amount of the first support part in the direction toward or away from the second support part as the relative movement amount when the first support part moves toward or away from the second support part.

In this aspect, because only one support part can move toward or away from the other support part and occurrence of the presence of articles trapped in the sealed portion is determined by detecting the movement amount, the relative movement amount can be measured with a simple configuration to detect the presence of trapped articles.

### <Advantageous Effects of Invention>

In the packaging machine of the present invention, the presence of articles trapped in the sealed portion can be detected even when the mechanism, used as the drive source for driving the sealing members, is incapable of perceiving the force/moment exerted on the film by the drive source via the sealing members and positional information pertaining to the drive source (e.g., the rotational angle of the motor, etc.), directly from information obtained from the drive source.

### BRIEF DESCRIPTION OF THE DRAWINGS

FIG. 1 is a perspective view of a weighing and packaging apparatus including a packaging machine (bag making and packaging machine) according to an embodiment of the present invention.
FIG. 2 is a block diagram of the weighing and packaging apparatus according to FIG. 1.
FIG. 3 is a perspective view showing the general configuration of the bag making and packaging unit of the bag making and packaging machine according to FIG. 1.
FIG. 4 is a side view, as seen from the right in FIG. 2, of the lateral sealing mechanism of the bag making and packaging unit according to FIG. 3.
FIG. 5 is a side view, as seen from the right in FIG. 2, of the path of the sealing jaws of the lateral sealing mechanism according to FIG. 4.
FIG. 6 is a perspective view, as seen from the rear right in FIG. 2, of the horizontal-direction pressing mechanism of the lateral sealing mechanism according to FIG. 4.
FIG. 7 is a side view showing the condition in which the sealing action is performed by the sealing jaws of the lateral sealing mechanism according to FIG. 4.
FIG. 8 is a perspective view showing the attaching manner of the rotary encoder in the bag making and packaging mechanism according to FIG. 1.

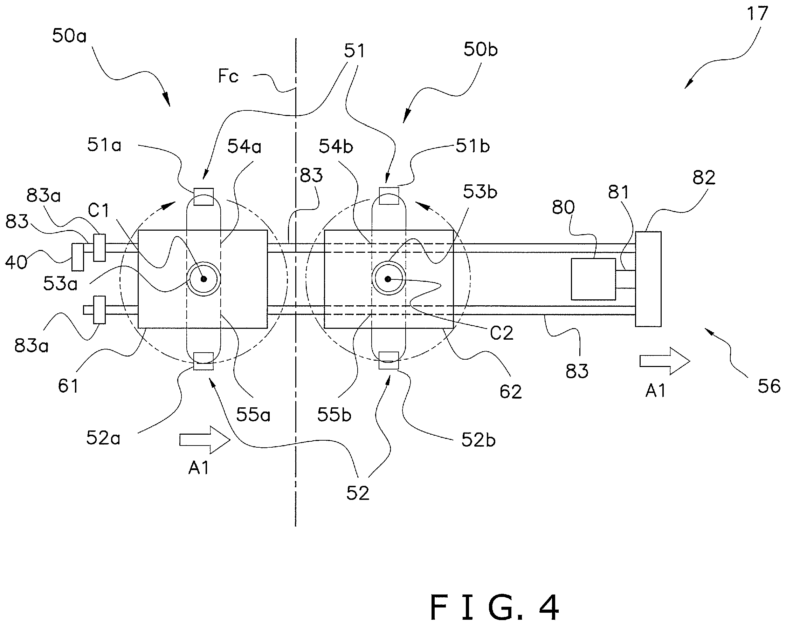

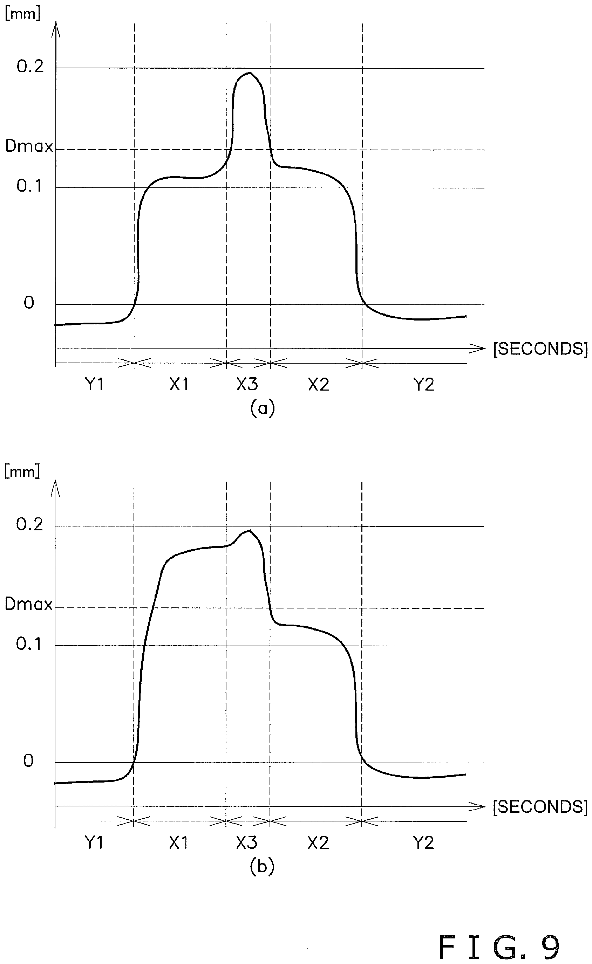

FIG. 9 shows graphs showing the change over time in the movement amount of the first rotating shaft relative to the second rotating shaft, during the sealing action by the sealing jaws of the lateral sealing mechanism according to FIG. 4. FIG. 9(a) shows the change over time in the movement amount of the first rotating shaft relative to the second rotating shaft, when no articles are present in the sealed portion. FIG. 9(b) shows the change over time in the movement amount of the first rotating shaft relative to the second rotating shaft, when articles are present in the sealed portion within the time period X1.
FIG. 10 is a perspective view showing the attaching manner of the load cell in the bag making and packaging machine according to Modification A.
FIG. 11 is a perspective view showing the attaching manner of the potentiometer in the bag making and packaging machine according to Modification A.
FIG. 12 is a drawing showing the path of sealing jaws of a lateral sealing mechanism which performs D-shaped motion according to Modification C.

### DESCRIPTION OF EMBODIMENTS

An embodiment of the present invention is described below with reference to the drawings. The following embodiment is a specific example of the embodiment of the present invention and is not intended to limit the technical scope of the present invention.

### (1) Overall configuration

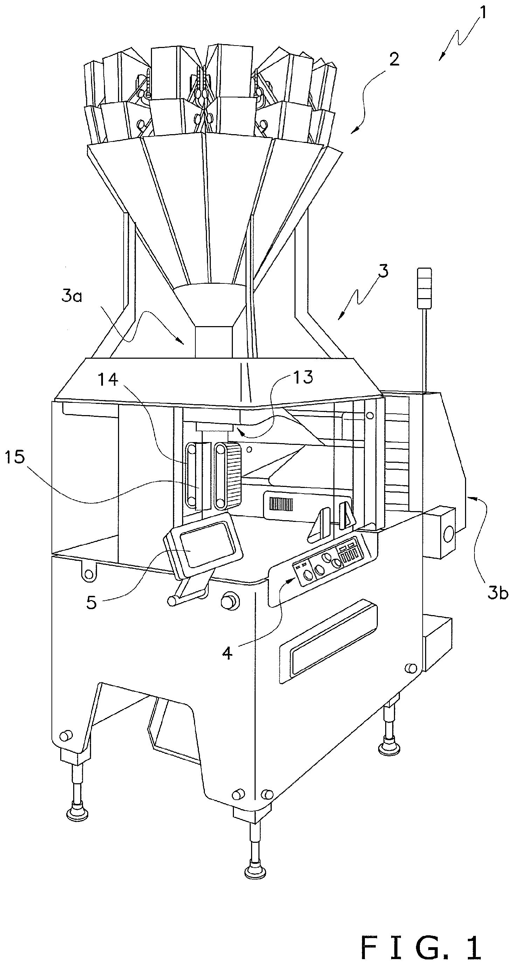

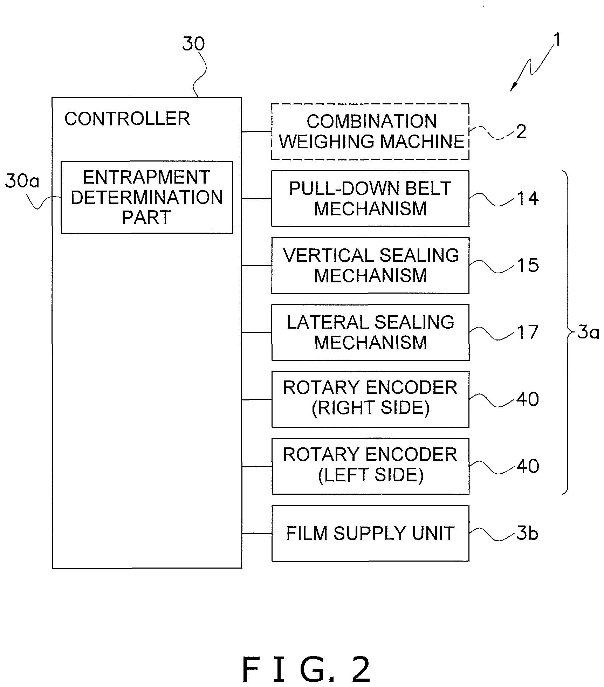

FIG. 1 is a perspective view of a weighing and packaging apparatus 1 including a bag making and packaging machine 3 according to an embodiment of the present invention. FIG. 2 is a block diagram of the weighing and packaging apparatus 1.

The weighing and packaging apparatus 1 has primarily a combination weighing machine 2, the bag making and packaging machine 3, and a controller 30 (see FIGS. 1 and 2). The bag making and packaging machine 3 is provided with a bag making and packaging unit 3a and a film supply unit 3b (see FIG. 1).

The combination weighing machine 2 is disposed above the bag making and packaging unit 3a. In the combination weighing machine 2, goods C (packaged goods) are weighed in a plurality of weighing hoppers, the weight values are combined so as to reach a predetermined total weight, and goods C having the combined predetermined total weight are discharged downward.

The bag making and packaging unit 3a of the bag making and packaging machine 3 bags the goods C in accordance with the timing at which the goods C are supplied from the combination weighing machine 2. The film supply unit 3b supplies a film F for packaging, which will be formed into a bag B, to the bag making and packaging unit 3a.

The weighing and packaging apparatus 1 is provided with operation switches 4 for operating the weighing and packaging apparatus 1. The weighing and packaging apparatus 1 is provided with a touch panel display 5 on which the operating state of the weighing and packaging apparatus 1 is displayed, and to which various settings for the weighing and packaging apparatus 1 are inputted. The operation switches 4 and the touch panel display 5 function as input parts for receiving commands for the combination weighing machine 2 and the bag making and packaging machine 3, and/or settings pertaining to the combination weighing machine 2 and the bag making and packaging machine 3. The touch panel display 5 functions as an output part for displaying information pertaining to the combination weighing machine 2 and the bag making and packaging machine 3. In the present embodiment, the operation switches 4 and the touch panel display 5 are shared by the combination weighing machine 2 and the bag making and packaging machine 3 but are not limited as such; operation switches and a touch panel display may be provided to each machine.

The operation switches 4 and the touch panel display 5 are connected to the controller 30, which is configured from a CPU, ROM, RAM and the like. The controller 30 controls the combination weighing machine 2 and the bag making and packaging machine 3 in accordance with operations and settings inputted from the operation switches 4 and/or the touch panel display 5. The controller 30 takes in necessary information from various sensors arranged to the combination weighing machine 2 and the bag making and packaging machine 3, and uses this information to control the combination weighing machine 2 and the bag making and packaging machine 3. In the present embodiment, the controller 30 controls both the combination weighing machine 2 and the bag making and packaging machine 3. In other words, the controller 30 constitutes part of the combination weighing machine 2 as a control part of the combination weighing machine 2. The controller 30 also constitutes part of the bag making and packaging machine 3 as a control part of the bag making and packaging machine 3. The configuration is not limited to this example and respective controllers may be provided to the combination weighing machine 2 and the bag making and packaging machine 3.

### (2) Detailed configuration

The details of the bag making and packaging machine 3 and the controller 30 will be described.

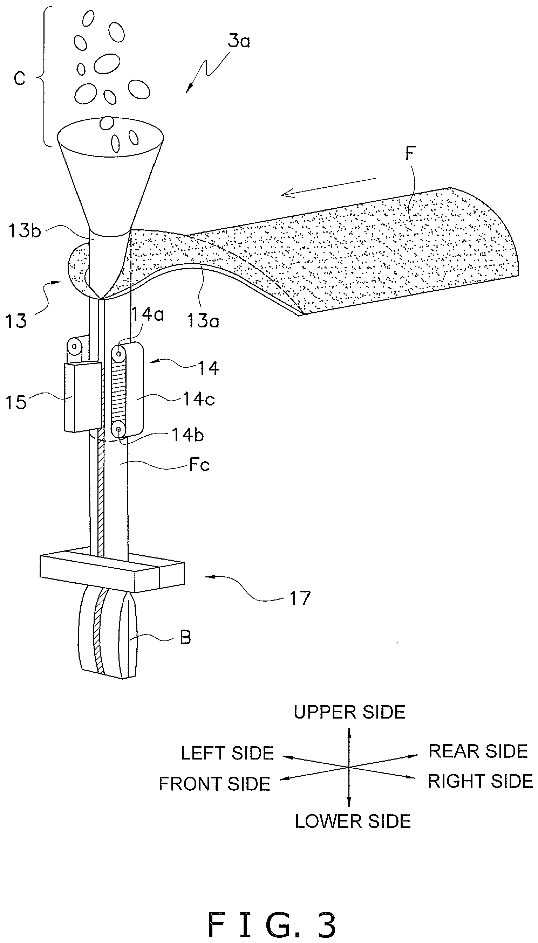

In the following description, the expressions "front (front surface)," "rear (back surface)," "up," "down," "left," "right," and the like are sometimes used in order to represent directions. The expressions "front (front surface)," "rear (back surface)," "up," "down," "left," and "right" are defined as shown in FIG. 3. When not specified otherwise, the expressions "front (front surface)," "rear (back surface)," "up," "down," "left," "right," and the like are used according to how they are defined in FIG. 3. The expressions "upstream" and "downstream" are also sometimes used, and when not specified otherwise, the terms "upstream" and "downstream" use the conveying direction of the film F as a standard.

### (2-1) Bag making and packaging unit

The bag making and packaging unit 3a is described below.

The bag making and packaging unit 3a has primarily a forming mechanism 13, a pull-down belt mechanism 14, a vertical sealing mechanism 15, a lateral sealing mechanism 17, and a rotary encoder 40 (see FIGS. 2 and 3).

The forming mechanism 13 forms the sheet-like film F, which is conveyed from the film supply unit 3b, into a tube shape. The pull-down belt mechanism 14 downwardly conveys the film F formed into a tubular shape (hereinafter called the tubular film Fc). The vertical sealing mechanism 15 vertically seals the overlapping portions (the seams) of the tubular film Fc. The lateral sealing mechanism 17 seals the upper and lower ends of the bag B by sealing (laterally sealing) the downwardly conveyed tubular film Fc along a direction intersecting the conveying direction. Further the lateral sealing mechanism 17 cut the laterally sealed bag B away from the tubular film Fc with a knife 72a arranged to sealing jaws 51b, 52b, described hereinafter. The packaged bag B cut away from the tubular film Fc is discharged from the bottom of the bag making and packaging machine 3. The rotary encoder 40 measures the amount of movement of a first rotating shaft 53a of a first rotating body 50a of the lateral sealing mechanism 17, described hereinafter (the amount of relative movement of the first rotating shaft 53a in relation to a second rotating shaft 53b of a second rotating body 50b of the lateral sealing mechanism 17, described hereinafter).

### (2-1-1) Forming mechanism

The forming mechanism 13 has a tube 13b and a former 13a.

The tube 13b is a tubular member, open at the upper and lower ends. The goods C weighed by the combination weighing machine 2 are loaded into the opening at the upper end of the tube 13b.

The former 13a is disposed so as to surround the tube 13b. The film F in sheet form unreeled from a film roll of the film supply unit 3b is formed into a tube shape when passing between the former 13a and the tube 13b. The tube 13b and the former 13a of the forming mechanism 13 can be replaced depending on the size of the bag B to be produced.

### (2-1-2) Pull-down belt mechanism

The pull-down belt mechanism 14 sticks to and continuously downwardly conveys the tubular film Fc that is wound around the tube 13b. The pull-down belt mechanism 14 has a pair of belts 14c disposed on the left and right sides of the tube 13b so as to sandwich the tube 13b, as shown in FIG. 3. In the pull-down belt mechanism 14, the belts 14c, which have a sucking function, are rotated by a drive roller 14a and a driven roller 14b, whereby the tubular film Fc is conveyed downward. FIG. 3 does not show a roller drive motor for rotating the drive roller 14a and the like.

### (2-1-3) Vertical sealing mechanism

The vertical sealing mechanism 15 heat-seals the tubular film Fc in the vertical direction (in the up-down direction in FIG. 3).

The vertical sealing mechanism 15 is disposed on the front side of the tube 13b (see FIG. 3). The vertical sealing mechanism 15 is driven in the forward-backward direction by a drive mechanism (not shown) so as to move toward the tube 13b or move away from the tube 13b. When the vertical sealing mechanism 15 is driven by the drive mechanism so as to move toward the tube 13b, the overlapping portions (the seams) of the tubular film Fc wound around the tube 13b are sandwiched between the vertical sealing mechanism 15 and the tube 13b. The vertical sealing mechanism 15 heats the overlapping portions of the tubular film Fc while sandwiching them with the tube 13b and thereby heat-seals them in the vertical direction.

### (2-1-4) Lateral sealing mechanism

As will be described hereinafter, the lateral sealing mechanism 17 is a mechanism in which the sealed portions of the downwardly conveyed tubular film Fc are sandwiched and laterally sealed along a direction (the left-right direction in this case) intersecting the conveying direction of the tubular film Fc, by a pair of sealing jaws 51 (a sealing jaw 51a and a sealing jaw 51b), or a pair of sealing jaws 52 (a sealing jaw 52a and a sealing jaw 52b).

The lateral sealing mechanism 17 has primarily a first rotating body 50a, a second rotating body 50b, and a horizontal-direction pressing mechanism 56, as shown in FIG. 4. The first rotating body 50a is placed on the front side of the tubular film Fc (the left side in FIG. 4). The second rotating body 50b is placed on the back side of the tubular film Fc (the right side in FIG. 4). As will be described hereinafter, when the tubular film Fc is sandwiched between the pair of sealing jaws 51 or the pair of sealing jaws 52, the horizontal-direction pressing mechanism 56 constantly presses the first rotating shaft 53a of the first rotating body 50a toward the second rotating shaft 53b of the second rotating body 50b (rearward) so that the tubular film Fc is to be pressed between the pair of sealing jaws 51 or the pair of sealing jaws 52. In FIG. 4, the direction in which the first rotating shaft 53a is pressed toward the second rotating shaft 53b is shown by the right-pointing arrows A1.

### (2-1-4-1) Rotating bodies

The first rotating body 50a and the second rotating body 50b will be described in detail.

### (2-1-4-1-1) First rotating body

The first rotating body 50a has primarily a first rotating shaft 53a, a pair of levers 54a, a pair of levers 55a, the sealing jaw 51a, and the sealing jaw 52a, as shown in FIG. 4.

The first rotating shaft 53a is a rotating shaft of the first rotating body 50a extending in the left-right direction. In a side view, the first rotating body 50a rotates about a rotational axis C1 with the first rotating shaft 53a as a rotating shaft (see FIG. 4).

The pair of levers 54a is respectively connected near the longitudinal ends (near the left-right directional ends) of the first rotating shaft 53a. Each of the levers 54a extends from the first rotating shaft 53a in the radial direction of the first rotating shaft 53a. Each of the levers 54a extends from the first rotating shaft 53a in the same direction and in parallel with the other lever 54a.

The pair of levers 55a is respectively connected near the longitudinal ends (near the left-right directional ends) of the first rotating shaft 53a. Each of the levers 55a extends from the first rotating shaft 53a in the radial direction of the first rotating shaft 53a. Each of the levers 55a extends from the first rotating shaft 53a in the same direction and in parallel with the other lever 55a.

In a side view, the lever 54a and the lever 55a that are connected near the right end of the first rotating shaft 53a extend in point symmetry with respect to the rotational center C1 of the first rotating body 50a (see FIG. 4). In other words, in a side view, the lever 54a and the lever 55a that are connected near the right end of the first rotating shaft 53a extend in opposite directions from the rotational center C1 of the first rotating body 50a (see FIG. 4). In a side view, the lever 54a and the lever 55a that are connected near the left end of the first rotating shaft 53a extend in point symmetry with respect to the rotational center C1 of the first rotating body 50a. In other words, in a side view, the lever 54a and the lever 55a that are connected near the left end of the first rotating shaft 53a extend in opposite directions from the rotational center C1 of the first rotating body 50a.

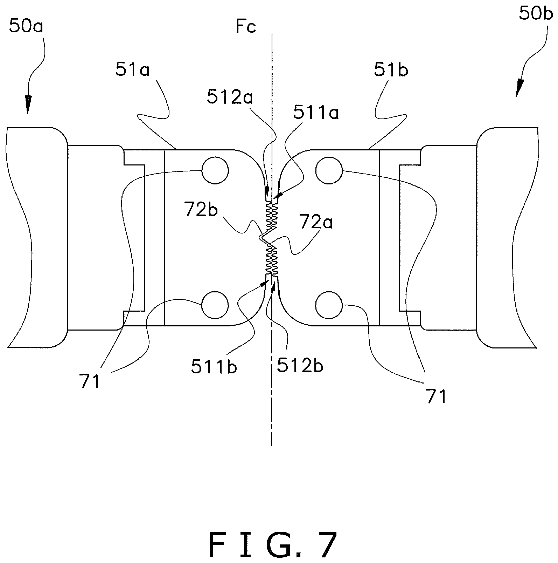

The sealing jaw 51a constitutes one of the pair of sealing jaws 51. The sealing jaws 51 are an example of the sealing members. The sealing jaw 51a has a sealing surface 511a (see FIG. 7) of which the left-right direction is the longitudinal direction.

The sealing jaw 51a functions as a pair with the sealing jaw 51b described hereinafter, and seals the sealed portion of the tubular film Fc. More specifically, the sealing jaws 51 sandwich and laterally seal the sealed portion of the tubular film Fc in the left-right direction (see FIG. 7), using the sealing surface 511a of the sealing jaw 51a of which the left-right direction is the longitudinal direction and a later-described sealing surface 511b of the sealing jaw 51b of which the left-right direction is the longitudinal direction.

Both ends of the sealing jaw 51a in the longitudinal direction (the left-right direction) of the sealing surface 511a are respectively connected to the ends of the levers 54a extending from the first rotating shaft 53a. Because the levers 54a are connected to the first rotating shaft 53a as described above, the sealing jaw 51a is supported by the first rotating shaft 53a at both ends in the longitudinal direction (the left-right direction) of the sealing surface 511a, via the pair of levers 54a.

The sealing jaw 52a constitutes one of the pair of sealing jaws 52. The sealing jaws 52 are an example of the sealing members. The sealing jaw 52a has a sealing surface (not shown) of which the left-right direction is the longitudinal direction.

The sealing jaw 52a functions as a pair with the sealing jaw 52b described hereinafter, and seals the sealed portion of the tubular film Fc. More specifically, the sealing jaws 52 sandwich and laterally seal the sealed portion of the tubular film Fc in the left-right direction, using the sealing surface of the sealing jaw 51a of which the left-right direction is the longitudinal direction and a later-described sealing surface (not shown) of the sealing jaw 51b of which the left-right direction is the longitudinal direction.

Both ends of the sealing jaw 52a in the longitudinal direction (the left-right direction) of the sealing surface are respectively connected to the ends of the levers 55a extending from the first rotating shaft 53a. Because the levers 55a are connected to the first rotating shaft 53a as described above, the sealing jaw 52a is supported by the first rotating shaft 53a at both ends in the longitudinal direction (the left-right direction) of its sealing surface, via the pair of levers 55a. Because the levers 54a and the levers 55a extend in opposite directions from the rotational center C1 of the first rotating body 50a in a side view, the sealing jaw 52a is disposed in a position 180° away from the sealing jaw 51a about the rotational center C1 of the first rotating body 50a.

### (2-1-4-1-2) Second rotating body

The second rotating body 50b has primarily the second rotating shaft 53b, a pair of levers 54b, a pair of levers 55b, the sealing jaw 51b, and the sealing jaw 52b, as shown in FIG. 4.

The second rotating shaft 53b is a rotating shaft of the second rotating body 50b extending in the left-right direction. In a side view, the second rotating body 50b rotates about a rotational center C2 with the second rotating shaft 53b as the rotating shaft (see FIG. 4).

The pair of levers 54b are respectively connected near the longitudinal ends (near the left-right directional ends) of the second rotating shaft 53b. Each of the levers 54b extends from the second rotating shaft 53b in the radial direction of the second rotating shaft 53b. Each of the levers 54b extends from the second rotating shaft 53b in the same direction and in parallel with the other lever 54b.

The pair of levers 55b is respectively connected near the longitudinal ends (near the left-right directional ends) of the second rotating shaft 53b. Each of the levers 55b extends from the second rotating shaft 53b in the radial direction of the second rotating shaft 53b. Each of the levers 55b extends from the second rotating shaft 53b in the same direction and in parallel with the other lever 55b.

In a side view, the lever 54b and the lever 55b that are connected near the right end of the second rotating shaft 53b extend in point symmetry with respect to the rotational center C2 of the second rotating body 50b (see FIG. 4). In other words, in a side view, the lever 54b and the lever 55b that are connected near the right end of the second rotating shaft 53b extend in opposite directions from the rotational center C2 of the second rotating body 50b (see FIG. 4). In a side view, the lever 54b and the lever 55b that are connected near the left end of the second rotating shaft 53b extend in point symmetry with respect to the rotational center C2 of the second rotating body 50b. In other words, in a side view, the lever 54b and the lever 55b that are connected near the left end of the second rotating shaft 53b extend in opposite directions from the rotational center C2 of the second rotating body 50b.

The sealing jaw 51b constitutes one of the pair of sealing jaws 51. The sealing jaw 51b has a sealing surface 511b (see FIG. 7) of which the left-right direction is the longitudinal direction. The sealing jaw 51b functions as a pair with the sealing jaw 51a as previously described, and seals the sealed portion of the tubular film Fc.

Both ends of the sealing jaw 51b in the longitudinal direction (the left-right direction) of the sealing surface 511b are respectively connected to the ends of the levers 54b extending from the second rotating shaft 53b. Because the levers 54b are connected to the second rotating shaft 53b as described above, the sealing jaw 51b is supported by the second rotating shaft 53b at both ends in the longitudinal direction (the left-right direction) of the sealing surface 511b, via the pair of levers 54b.

The sealing jaw 52b constitutes one of the pair of sealing jaws 52. The sealing jaw 52b has a sealing surface (not shown) of which the left-right direction is the longitudinal direction. The sealing jaw 52b functions as a pair with the sealing jaw 52a as previously described, and seals the sealed portion of the tubular film Fc.

Both ends of the sealing jaw 52b in the longitudinal direction (the left-right direction) of the sealing surface are respectively connected to the ends of the levers 55b extending from the second rotating shaft 53b. Because the levers 55b are connected to the second rotating shaft 53b as described above, the sealing jaw 52b is supported by the second rotating shaft 53b at both ends in the longitudinal direction (the left-right direction) of its sealing surface, via the pair of levers 55b. Because the levers 54b and the levers 55b extend in opposite directions from the rotational center C2 of the second rotating body 50b in a side view, the sealing jaw 52b is disposed in a position 180° away from the sealing jaw 51b about the rotational center C2 of the second rotating body 50b.

### (2-1-4-1-3) Operation of first and second rotating bodies

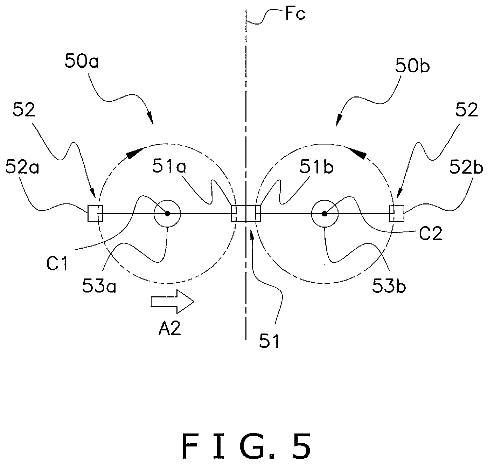

The first rotating shaft 53a is driven by a drive motor (not shown), whereby the first rotating body 50a is to be rotated about the rotational center C1 in a side view (see FIG. 5). The second rotating shaft 53b is driven by a drive motor (not shown), whereby the second rotating body 50b is to be rotated about the rotational center C2 in a side view (see FIG. 5). This causes the sealing jaw 51a and the sealing jaw 52a to rotate in a circular orbit about the rotational center C1, and the sealing jaw 51b and the sealing jaw 52b to rotate in a circular orbit about the rotational center C2 (see FIG. 5). The first rotating body 50a, when viewed from the right side, is to be rotated clockwise about the rotational center C1 (see FIG. 5). In other words, the sealing jaw 51a and the sealing jaw 52a, when viewed from the right side, are to be rotated clockwise about the rotational center C1. The second rotating body 50b, when viewed from the right side, is to be rotated counterclockwise about the rotational center C2 (see FIG. 5). In other words, the sealing jaw 51b and the sealing jaw 52b, when viewed from the right side, are to be rotated counterclockwise about the rotational center C2.

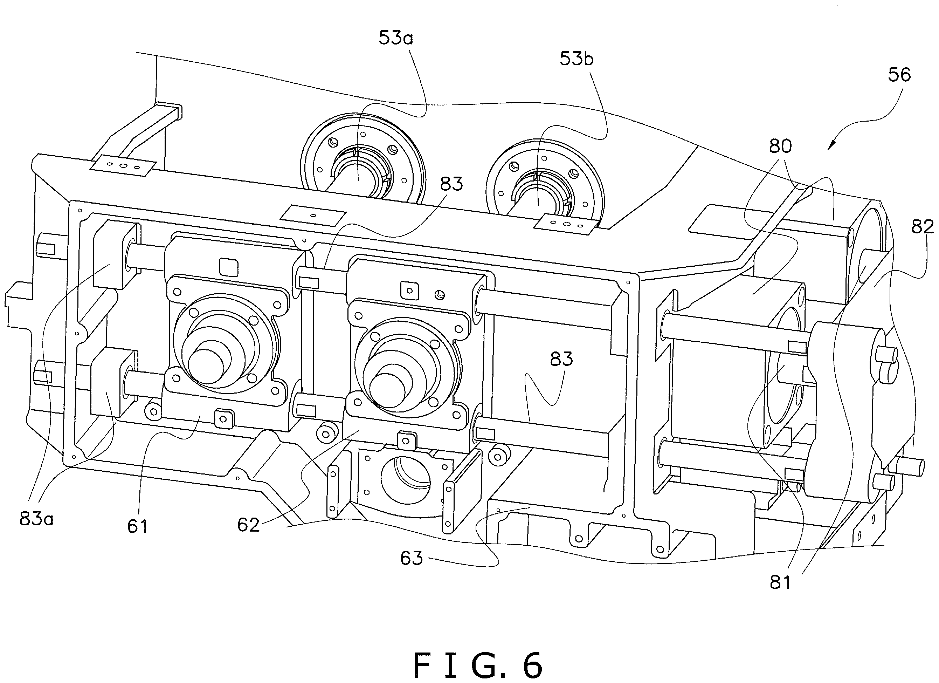

The first rotating body 50a is supported at both ends in the lateral sealing direction (in the left-right direction) by horizontally moving plates 61 (see FIG. 4). More specifically, both ends in the left-right direction of the first rotating shaft 53a of the first rotating body 50a are supported by the horizontally moving plates 61. The second rotating body 50b is supported at both ends in the lateral sealing direction (in the left-right direction) by stationary plates 62 (see FIG. 4). More specifically, both ends in the left-right direction of the second rotating shaft 53b of the second rotating body 50b are supported by the stationary plates 62. The stationary plates 62 are secured to a frame 63 (see FIG. 6) of the bag making and packaging unit 3a.

The horizontally moving plates 61 are pressed toward the stationary plates 62 by the horizontal-direction pressing mechanism 56 (refer to the arrows A1 in FIG. 4). As a result, the first rotating shaft 53a supported on the horizontally moving plates 61 is pressed by the horizontal-direction pressing mechanism 56 toward the second rotating shaft 53b supported on the stationary plates 62.

### (2-1-4-2) Horizontal-direction pressing mechanism

The horizontal-direction pressing mechanism 56 will be described. The horizontal-direction pressing mechanism 56 is an example of a fluid-pressure-utilizing mechanism. The horizontal-direction pressing mechanism 56 utilizes air pressure to press the first rotating shaft 53a toward the second rotating shaft 53b. The horizontal-direction pressing mechanism 56 utilizes air pressure in this embodiment, but the configuration is not limited to this, and may utilize, e.g., oil pressure.

The horizontal-direction pressing mechanism 56 has primarily an air cylinder 80, a first linking rod 81, a linking plate 82, and second linking rods 83, as shown in FIG. 4.

The air cylinder 80 is driven by air pressure. The air cylinder 80 is connected with the linking plate 82 via the first linking rod 81 which extends rearward from the air cylinder 80. When the air cylinder 80 is driven, force is transferred via the first linking rod 81, and the linking plate 82 is pressed rearward. In FIG. 4, the direction in which the linking plate 82 is pressed is indicated by the right-pointing arrows A1.

The second linking rods 83 are rod-shaped members connecting the linking plate 82 and the horizontally moving plates 61. The horizontal-direction pressing mechanism 56 has four second linking rods 83. One end of each second linking rod 83 is connected with the linking plate 82. Two of the second linking rods 83 extend forward in parallel from the upper-right corner vicinity and the lower-right corner vicinity of the linking plate 82, as shown in FIG. 6. Though not illustrated, the other two second linking rods 83 extend forward in parallel from the upper-left corner vicinity and the lower-left corner vicinity of the linking plate 82. The two second linking rods 83 that extend forward from the right-side end vicinities of the linking plate 82 are connected with the horizontally moving plate 61 disposed on the right side of the first rotating body 50a. The two second linking rods 83 that extend forward from the left-side end vicinities of the linking plate 82 are connected with the horizontally moving plate 61 disposed on the left side of the first rotating body 50a. The second linking rods 83 are not connected with the stationary plates 62, but the second linking rods 83 slideably extend through the stationary plates 62. The end (front-side end) vicinities of the second linking rods 83 on the side opposite the linking plate 82 are slideably supported by rod support members 83a secured to the frame 63 of the bag making and packaging unit 3a. Because the second linking rods 83 are slideably supported by the rod support members 83a, the horizontally moving plates 61 connected with the second linking rods 83 can move toward or away from the stationary plates 62. In other words, the first rotating shaft 53a supported on the horizontally moving plates 61 can move toward or away from the second rotating shaft 53b supported on the stationary plates 62. The first rotating shaft 53a moves toward or away from the second rotating shaft 53b according to the balance between the force from the air cylinder 80 and the force exerted either by the sealing jaw 51b on the sealing jaw 51a, or by the sealing jaw 52b on the sealing jaw 52a, when the tubular film Fc is being laterally sealed by the sealing jaws 51 or the sealing jaws 52.

### (2-1-4-3) Sealing action by sealing jaws

Next, the sealing action by the sealing jaws 51 will be described. More specifically, the following is a description of the lateral sealing of the tubular film Fc by the sealing jaws 51 during the sealing action by the sealing jaws 51, and the cutting of the laterally sealed bag B away from the tubular film Fc in the sealing jaws 51.

The rotating of the first rotating body 50a and the second rotating body 50b (the rotational direction is indicated by the arrows depicted in two-dot chain lines in FIG. 5) and the pressing of the first rotating shaft 53a toward the second rotating shaft 53b by the horizontal-direction pressing mechanism 56 (the pressing direction is indicated by the arrow A2 depicted below the first rotating body 50a in FIG. 5) cause the sealing jaw 51a and the sealing jaw 51b to sandwich and apply pressure to the downwardly conveyed tubular film Fc between the sealing surface 511a of the sealing jaw 51a and the sealing surface 511b of the sealing jaw 51b (see FIG. 7). The sealing surface 511a and the sealing surface 511b have serrations 512a and serrations 512b which mesh with each other, as shown in FIG. 7. The sealing jaws 51 sandwich the tubular film Fc so that the teeth of the serrations 512a in the sealing surface 511a and the teeth of the serrations 512b in the sealing surface 511b mesh each other and apply pressure to the tubular film Fc. The sealing jaw 51a and the sealing jaw 51b have heaters 71 (see FIG. 7) arranged in the interiors, and the sealing surface 511a and sealing surface 511b are heated by these heaters 71. The sealing surface 511a and the sealing surface 511b are heated while the tubular film Fc is sandwiched by the sealing surface 511a and the sealing surface 511b, the sealed portion of the tubular film Fc is thereby heat-sealed. The downwardly conveyed tubular film Fc is heat-sealed in order from the downstream side (the forward side in the conveying direction) toward the upstream side (the rearward side in the conveying direction).

In the sealing jaw 51b, a knife 72a for cutting the bag B away from the tubular film Fc is disposed near the middle of the sealing surface 511b in the transverse direction (a direction orthogonal to the longitudinal direction of the sealing surface 511b). The knife 72a is disposed so that the blade tip protrudes on the side of the sealing jaw 51a during the sealing action by the sealing jaw 51a and the sealing jaw 51b (see FIG. 7). In the sealing jaw 51a, a groove 72b, with which the knife 72a protruding from the sealing jaw 51b toward the sealing jaw 51a meshes, is formed near the middle of the sealing surface 511a in the transverse direction (a direction orthogonal to the longitudinal direction of the sealing surface 511a). The knife 72a, which is formed into a slanted blade, cuts the bag B away from the tubular film Fc from one end side toward the other end side in the lateral sealing direction (the left-right direction).

Because the knife 72a is disposed near the middle of the sealing surface 511b of the sealing jaw 51b in the transverse direction, the sealing jaws 51 perform the following actions in order as single sealing action:
(1) Laterally sealing the tubular film Fc
(2) Cutting the transversely sealed bag B away from the tubular film Fc using the knife 72a on the upstream side of the position laterally sealed in (1)
(3) Laterally sealing the tubular film Fc on the upstream side of the position cut by the knife 72a in (2)

However, the timing with which lateral sealing or cutting of the tubular film Fc is performed by one set of actions (1) to (3) may partially overlap the timing with which another set of actions (1) to (3) is performed. In other words, cutting of the tubular film Fc in (2) may begin at a timing when lateral sealing in (1) is not completely finished, and lateral sealing in (3) may begin when cutting of the tubular film Fc in (2) is not finished.

Lateral sealing of the tubular film Fc by the sealing jaws 52 and cutting the laterally sealed bag B away from the tubular film Fc in the sealing jaws 52 are similar to those actions of the sealing jaws 51, and are therefore not described here.

### (2-1-5) Rotary encoder

The rotary encoder 40 is one example of a movement amount detector.

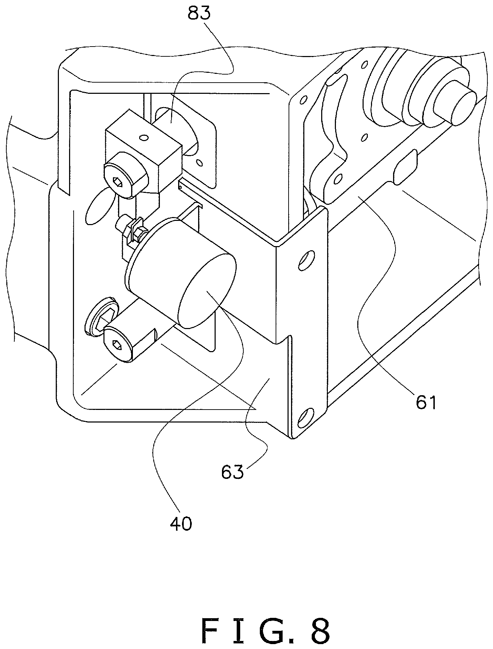

The rotary encoder 40 is secured to the frame 63 of the bag making and packaging unit 3a (see FIG. 8). A rotating shaft of the rotary encoder 40 is engaged with the forward-side (the side opposite to the side connected with the linking plate 82) end part of the second linking rod 83 so as to rotate due to the second linking rod 83 moving forward and backward. Two rotary encoders 40 are provided. The rotating shaft of one rotary encoder 40 is engaged with the end part of the second linking rod 83 that, among the four second linking rods 83, is located on the upper right side. The rotating shaft of the other rotary encoder 40 is engaged with the end part of the second linking rod 83 that is located on the upper left side. The arrangement is not limited to this example, and the rotating shaft of one rotary encoder 40 may be engaged with the end part of the second linking rod 83 located on the lower right side, while the rotating shaft of the other rotary encoder 40 may be engaged with the end part of the second linking rod 83 located on the lower left side.

The rotary encoders 40 measure the forward and backward movement amount of the second linking rods 83 by measuring the rotational angles of the rotating shafts of the rotary encoders 40. The forward and backward movement amount of the second linking rods 83 is equal to the amount by which the first rotating shaft 53a, attached to the horizontally moving plates 61 connected to the second linking rods 83, moves relative to the second rotating shaft 53b attached to the stationary plates 62. In other words, the rotary encoders 40 measure the amount by which the first rotating shaft 53a moves relative to the second rotating shaft 53b in the direction that the first rotating shaft 53a moves either toward or away from the second rotating shaft 53b, by measuring the rotational angles of the rotating shafts of the rotary encoders 40.

The movement amount of the second linking rods 83 connected to the horizontally moving plate 61 disposed on the right side of the first rotating shaft 53a, and the movement amount of the second linking rods 83 connected to the horizontally moving plate 61 disposed on the left side of the first rotating shaft 53a, are measured by the rotary encoders 40 as described above. In other words, the movement amount (right-side movement amount) of the first rotating shaft 53a on the side of the right-side end part relative to the second rotating shaft 53b, and the movement amount (left-side movement amount) of the first rotating shaft 53a on the side of the left-side end part relative to the second rotating shaft 53b, are measured by the rotary encoders 40. Therefore, the movement of either the left or right end part of the first rotating shaft 53a, toward or away from the second rotating shaft 53b, can be detected.

### (2-2) Film supply unit

The film supply unit 3b is a unit for supplying the film F in sheet shape to the forming mechanism 13 of the bag making and packaging unit 3a. The film supply unit 3b is arranged adjacent to the bag making and packaging unit 3a. A roll around which the film F is wound is set in the film supply unit 3b, and the film F is unreeled from this roll.

### (2-3) Controller

The controller 30 includes primarily a CPU, ROM, RAM, and other storage media. The controller 30, which is connected to the components of the combination weighing machine 2, constitutes part of the combination weighing machine 2 as a control part of the combination weighing machine 2. The controller 30 is also connected (see FIG. 2) with the components (primarily, the drive motors for driving the pull-down belt mechanism 14, the vertical sealing mechanism 15, and the first and second rotating shafts 53a, 53b; the lateral sealing mechanism 17 having the air cylinder 80 of the horizontal-direction pressing mechanism 56 and other components; the rotary encoders 40 (the right and left sides); and the film supply unit 3b) of the bag making and packaging machine 3. The controller 30 constitutes part of the bag making and packaging machine 3 as a control part of the bag making and packaging machine 3. The controller 30 controls the combination weighing machine 2 and the bag making and packaging machine 3 by executing programs stored in the storage media.

The controller 30 controls the movement of the combination weighing machine 2 and the bag making and packaging machine 3 so that, e.g., the combination weighing machine 2 and the bag making and packaging machine 3 perform the following actions.

The controller 30 controls the combination weighing machine 2 so that the weight of the goods C as the packaged goods is weighed by a plurality of weighing hoppers, these weight values are combined so as to reach a predetermined total weight, and a combined predetermined total weight of goods C is discharged downward in the combination weighing machine 2. The goods C discharged from the combination weighing machine 2 are dropped into a top open end of the tube 13b of the bag making and packaging machine 3.

As a control part for controlling the bag making and packaging machine 3, the controller 30 controls the film supply unit 3b so that the film F is supplied to the forming mechanism 13. As a control part for controlling the bag making and packaging machine 3, the controller 30 also controls the pull-down belt mechanism 14 so that the film F formed into a tube shape by the forming mechanism 13 (the tubular film Fc) is conveyed downward, and controls the vertical sealing mechanism 15 so that the seams of the conveyed tubular film Fc are vertically sealed. As a control part for controlling the bag making and packaging machine 3, the controller 30 also controls the lateral sealing mechanism 17 so that the downwardly conveyed tubular film Fc is sealed in the lateral direction and the sealed bag B is cut away from the tubular film Fc on the upstream side, in conformity with the timing at which the goods C discharged from the combination weighing machine 2 are discharged from the bottom open end of the tube 13b.

The controller 30 has an entrapment determination part 30a as a functional part for controlling the bag making and packaging machine 3. Based on the amount (the right-side movement amount and left-side movement amount) by which the first rotating shaft 53a moves relative to the second rotating shaft 53b, which is measured by the rotary encoders 40, the entrapment determination part 30a determines whether or not any articles have been trapped in the sealed portion of the tubular film Fc when the sealing jaws 51, 52 laterally seal the film. The presence of articles trapped in the sealed portion of the tubular film Fc occurs when, e.g., when goods C are sandwiched in the sealed portion, and/or when cutting debris of the tubular film Fc are sandwiched in the sealed portion. The action to determine the presence of trapped articles performed by the entrapment determination part 30a is described hereinafter.

### (3) Determination of whether or not articles are present in sealed portion

The determination of whether or not articles are present in the sealed portion of the tubular film Fc is described below.

### (3-1) Change in movement amount of first rotating shaft relative to second rotating shaft during sealing action

Firstly, how the change in the movement amount of the first rotating shaft 53a relative to the second rotating shaft 53b during the sealing action by the sealing jaws 51 differs between cases when no articles are present in the sealed portion and cases when articles are trapped in the sealed portion, is described referring to FIG. 9. As an example, the movement amount of the right-side end of the first rotating shaft 53a will be described. The movement amount of the left-side end of the first rotating shaft 53a can be similarly described and is therefore not described here. Further, as an example, the sealing action by the sealing jaws 51 will be explained. The sealing action by the sealing jaws 52 can be similarly described and is therefore not described here.

The numerical values of the amount of displacement indicated on the vertical axes of the graphs shown in FIGS. 9(a) and 9(b) are merely specific examples of cases when the settings of the lateral sealing mechanism 17 are adjusted to certain conditions, and these numerical values are not limited to these examples. The numerical values of the amount of displacement change depending on the settings of the lateral sealing mechanism 17.

### (3-1-1) When no articles are present in sealed portion

FIG. 9(a) is a graph of the change in the movement amount of the first rotating shaft 53a relative to the second rotating shaft 53b when no articles are present in the sealed portion of the tubular film Fc. In FIG. 9(a), the horizontal axis indicates time, and the vertical axis indicates movement amount [mm]. The movement amount in the direction in which the first rotating shaft 53a moves away from the second rotating shaft 53b is represented by a positive value, and the movement amount in the direction in which the first rotating shaft 53a moves toward the second rotating shaft 53b is represented by a negative value.

The time period Y1 in FIG. 9(a) is a time period that precedes the start of the sealing action by the sealing jaws 51. Because the sealing action is not performed by the sealing jaws 51 in the time period Y1 (nor is the sealing action by the sealing jaws 52 performed), no particular force acts on the first rotating shaft 53a in the direction away from the second rotating shaft 53b. The movement amount of the first rotating shaft 53a in the time period Y1 indicates a negative value near 0. In the graph of FIG. 9(a), a reference point of the movement amount of the first rotating shaft 53a is taken so that the movement amount of the first rotating shaft 53a when the sealing action is not performed by the lateral sealing mechanism 17 is a value near 0.

The time period X1 in FIG. 9(a) is a period after the sealing action by the sealing jaws 51 has begun and lateral sealing of the tubular film Fc has begun. Furthermore, the time period X1 extends up to the point in time when cutting of the tubular film Fc by the knife 72a arranged to the sealing jaw 51b is started. The time period X1 is an example of the first time period. During the time period X1, the lower side of the sealing surface 511a of the sealing jaw 51a and the lower side of the sealing surface 511b of the sealing jaw 51b sandwich the tubular film Fc. Since the sealing jaw 51a attached to the first rotating body 50a is pushed by the sealing jaw 51b attached to the second rotating body 50b secured to the frame 63 via the stationary plates 62, the first rotating shaft 53a moves away from the second rotating shaft 53b. In the time period X1, the first rotating shaft 53a moves a distance of approximately 0.1 mm at maximum from the reference point in the direction away from the second rotating shaft 53b (see FIG. 9(a)).

The time period X3 in FIG. 9(a) starts at the point in time when the tubular film Fc begins to be cut by the knife 72a arranged to the sealing jaw 51b, and ends at the point in time when the tubular film Fc finishes being cut by the knife 72a. When the tubular film Fc is cut by the knife 72a in the time period X3, a force greater than that during lateral sealing is exerted by the sealing jaw 51b on the sealing jaw 51a, and the first rotating shaft 53a therefore moves even further away from the second rotating shaft 53b than in the time period X1. In the time period X3, the first rotating shaft 53a moves a distance of approximately 0.2 mm at maximum from the reference point in the direction away from the second rotating shaft 53b (see FIG. 9(a)).

The time period X2 in FIG. 9(a) starts at the point in time when the tubular film Fc has finished being cut by the knife 72a arranged to the sealing jaw 51b, and ends when the sealing jaws 51 finish laterally sealing the tubular film Fc on the upstream side of the position cut by the knife 72a (this time period lasts until the sealing jaws 51 complete the sealing action). The time period X2 is one example of the second time period. In the time period X2, the upper side of the sealing surface 511a of the sealing jaw 51a and the upper side of the sealing surface 511b of the sealing jaw 51b sandwich the tubular film Fc, and the sealing jaws 51a is pushed by the sealing jaw 51b similar to the time period X1. However, the force with which the sealing jaw 51a is pushed by the sealing jaw 51b is less in the time period X2 than in the time period X3 when the tubular film Fc is cut by the knife 72a, and the first rotating shaft 53a therefore moves nearer to the second rotating shaft 53b than in the time period X3. In the time period X2, the first rotating shaft 53a moves a distance of approximately 0.1 mm at maximum from the reference point in the direction away from the second rotating shaft 53b (see FIG. 9(a)).

The time period Y2 in FIG. 9(a) is the time period after the sealing action by the sealing jaws 51 is finished. Because the sealing action is not performed by the sealing jaws 51 (nor is the sealing action performed by the sealing jaws 52) in the time period Y2, no particular force acts on the first rotating shaft 53a in the direction away from the second rotating shaft 53b. The movement amount of the first rotating shaft 53a in the time period Y2 indicates a negative value near 0.

### (3-1-2) When articles are present in the sealed portion

Next, the change in the movement amount of the first rotating shaft 53a relative to the second rotating shaft 53b in a case when articles are trapped in the sealed portion, and particularly in a case when articles are trapped in the sealed portion during the lateral sealing in the time period X1, is described referring to FIG. 9(b). In FIG. 9(b), the horizontal and vertical axes are defined in the same manner as in FIG. 9(a). The time periods Y1, Y2 and the time periods X1, X3, X2 are also defined in the same manner in FIG. 9(b).

The time period Y1 is the same as when no articles are trapped in the sealed portion and is therefore not described.

During the lateral sealing performed in the time period X1, because articles are present in the sealed portion of the tubular film Fc, the sealing jaw 51a is pressed more strongly by the sealing jaw 51b than when no articles are present in the sealed portion. Therefore, when articles are present in the sealed portion during the lateral sealing performed in the time period X1, the movement amount of the first rotating shaft 53a relative to the second rotating shaft 53b is greater than when no articles are trapped in the sealed portion. For example, the maximum value of the movement amount of the first rotating shaft 53a relative to the second rotating shaft 53b in the time period X1 is close to the maximum value of the movement amount in the time period X3.

In the time period X3, the shape of the graph is different from FIG. 9(a) because movement amount of the first rotating shaft 53a relative to the second rotating shaft 53b in the time period X1 is larger. However, since large force is exerted on the sealing jaw 51a by the sealing jaw 51b when the tubular film Fc is cut by the knife 72a, the first rotating shaft 53a moves far away from the second rotating shaft 53b the same as in FIG. 9(a). In the time period X3, the first rotating shaft 53a moves a distance of approximately 0.2 mm at maximum from the reference point in the direction away from the second rotating shaft 53b (see FIG. 9(b)).

Regarding the time period X2 and the time period Y2, the graph in a case when articles are trapped in the sealed portion is the same that in a case when no articles are trapped in the sealed portion, and is therefore not described.

Although a detailed description is not given, when articles are trapped in the sealed portion during lateral sealing not in the time period X1 but in the time period X2, a graph of the movement amount of the first rotating shaft 53a having following characteristics is obtained.

The movement amount of the first rotating shaft 53a in the time periods X1 and X3 is the same as the movement amount of the first rotating shaft 53a in the time periods X1 and X3 in FIG. 9(a). The movement amount of the first rotating shaft 53a in the time period X2 exhibits the same tendency as the movement amount of the first rotating shaft 53a in the time period X1 in FIG. 9(b). In other words, the movement amount of the first rotating shaft 53a in the time period X2 is greater than the movement amount of the first rotating shaft 53a in the time period X3 in FIG. 9(a).

### (3-2) Action of determining whether or not articles are present in sealed portion by the entrapment determination part

The entrapment determination part 30a determines whether or not articles are present in the following manner, utilizing the difference in the movement amount of the first rotating shaft 53a relative to the second rotating shaft 53b between a case of no articles being present in the sealed portion, and a case of articles being present in the sealed portion, as described above.

Because there is a possibility that articles are present in both the time period X1 and the time period X2, the entrapment determination part 30a determines whether or not any articles are present for the time period X1 and the time period X2. A case in which the entrapment determination part 30a determines whether or not any articles are present in the time period X1 is used as an example for this description.

A default value, a maximum value Dmax (see FIG. 9) that the movement amount of the first rotating shaft 53a could take when the entrapment of articles is not caused, is given to the entrapment determination part 30a. The maximum value need not be the default value, and the entrapment determination part 30a may, e.g., measure and accumulate movement amounts of the first rotating shaft 53a in a case when the trapping of articles is not caused and calculate the maximum value Dmax based on the accumulated data.

The entrapment determination part 30a obtains measured values from the two rotary encoders 40 and calculates the average of the movement amount of the first rotating shaft 53a during the time period X1. Particularly, average value of the movement amount (right-side movement amount) of the right-side end of the first rotating shaft 53a relative to the second rotating shaft 53b, and average value of the movement amount (the left-side movement amount) of the left-side end of the first rotating shaft 53a relative to the second rotating shaft 53b are respectively calculated.

The entrapment determination part 30a compares the calculated average value of the right-side movement amount and the average value of the left-side movement amount with the maximum value Dmax that the movement amount of the first rotating shaft 53a could take when no articles are trapped, and determines that articles have been trapped in the time period X1 when either average value is greater than the maximum value Dmax. When both average values are equal to or less than the maximum value Dmax, it is determined that no articles have been trapped in the time period X1.

### (3-3) Control of bag making and packaging machine when it is determined that articles are present

When it is determined by the entrapment determination part 30a that articles have been trapped in the time period X1, the controller 30 discharges the bag B, which is laterally sealed in the time period X1 and cut away from the tubular film Fc in the subsequent time period X3, from the bag making and packaging machine 3 as a defective product, since there is a risk of a sealing defect. The bag B discharged as a defective product from the bag making and packaging machine 3 is conveyed to, e.g., a defective product collecting location by a conveyor (not shown). When it is determined by the entrapment determination part 30a that articles have been trapped in the time period X2, the controller 30 discharges the bag B, which is cut away during the sealing action by the sealing jaws 52 in succession with the sealing action by the sealing jaws 51, from the bag making and packaging machine 3 as a defective product since there is a risk of a sealing defect.

The control performed by the controller 30 when it is determined by the entrapment determination part 30a that articles have been trapped in the sealed portion of the tubular film Fc, is not limited to what is described above. For example, when it is determined that articles have been trapped, instead of controlling as described above, the controller 30 controls so that compressed air is vented out from the air cylinder 80 and either the sealing jaw 51a and sealing jaw 51b or the sealing jaw 52a and sealing jaw 52b are moved away from each other at the timing when the bag B having a risk of incomplete lateral sealing is to be cut, so as not to cut away the bag B having a risk of incomplete lateral sealing from the tubular film Fc.

### (4) Characteristics

The characteristics of the bag making and packaging machine 3 according to the present embodiment are described below.

For the sake of convenience in the description, the characteristics of the bag making and packaging machine 3 are described using the description of the pair of sealing jaws 51 (the sealing jaws 51a, 51b), but the characteristics of the bag making and packaging machine 3 could be described in the same manner using the description of the pair of sealing jaws 52.
(4-1) In the bag making and packaging machine 3 according to the present embodiment, a pair of sealing jaws 51 sandwiches and seals the sealed portion of the tubular film Fc. The bag making and packaging machine 3 is provided with the first rotating shaft 53a as an example of a first support part, the second rotating shaft 53b as an example of a second support part, the rotary encoders 40 as an example of a movement amount detector, and the entrapment determination part 30a. The first rotating shaft 53a supports one sealing jaw 51 (the sealing jaw 51a), and the second rotating shaft 53b supports the other sealing jaw 51 (the sealing jaw 51b). The rotary encoders 40 measure the relative movement amount of the first rotating shaft 53a in relation to the second rotating shaft 53b in an approaching direction or a moving away direction (in the present embodiment, movement amount of the first rotating shaft 53a is measured because the second rotating shaft 53b does not move in an approaching direction or moving away direction from the first rotating shaft 53a) when the first rotating shaft 53a and the second rotating shaft 53b approach or move away. The entrapment determination part 30a determines whether or not articles are present in the sealed portion based on the measured movement amount.
   Here, the presence of articles in the sealed portion can be detected even when the drive source for driving the sealing jaws 51 (a rotation motor for rotating the sealing jaws 51, and/or a horizontal-direction pressing mechanism 56 for pressing the sealing jaw 51a against the sealing jaw 51b) is a mechanism incapable of perceiving the force/moment exerted by the drive source on the tubular film Fc via the sealing jaws 51, and positional information pertaining to the drive source (e.g., the rotational angle of the motor or the like), directly from information obtained from the drive source. In other words, the presence of articles trapped in the sealed portion can be detected without using an expensive configuration such as a servo motor as the drive source.
(4-2) In the bag making and packaging machine 3 according to the present embodiment, the pair of sealing jaws 51 sandwich and laterally seal the tubular film Fc, which is conveyed in a first direction (downward in the present embodiment), along a direction (the left-right direction in the present embodiment) intersecting the first direction, due to the sealing jaws 51a, 51b being rotated along a circular orbit.
   Here, in the bag making and packaging machine 3 using a rotating lateral sealing mechanism, the presence of articles trapped in the sealed portion during lateral sealing can be detected.
(4-3) In the bag making and packaging machine 3 according to the present embodiment, the first and second support parts are the first rotating shaft 53a and the second rotating shaft 53b for rotating the sealing jaws 51.
   Here, in the bag making and packaging machine 3 using a rotating lateral sealing mechanism, presence of articles trapped in the sealed portion during lateral sealing can be detected by measuring the relative movement amount of the first rotating shaft 53a and the second rotating shaft 53b (in the present embodiment, the movement amount of the first rotating shaft 53a relative to the second rotating shaft 53b) for rotating the sealing jaws 51.
   One possible method for detecting the presence of articles trapped in the sealed portion is a method of measuring the relative movement amount of one sealing jaw 51 in relation to the other sealing jaw 51. However, when the movement amount of sealing jaws 51 rotating in a circular orbit is measured, the configuration for measuring the movement amount is likely to be complicated. Here, because the relative movement amount of the first rotating shaft 53a for rotating the sealing jaw 51a relative to the second rotating shaft 53b for rotating the sealing jaw 51b is measured, entrapment of articles in the sealed portion can be detected with a simpler configuration than it is detected by measuring the movement amount of the sealing jaws 51.
(4-4) The bag making and packaging machine 3 according to the present embodiment, is provided with the horizontal-direction pressing mechanism 56 as a fluid-pressure-utilizing pressing mechanism. The horizontal-direction pressing mechanism 56 constantly presses the first rotating shaft 53a toward the second rotating shaft 53b so that the tubular film Fc is to be pressed between the sealing jaws 51 when the tubular film Fc is sandwiched between the pair of sealing jaws 51.
   Here, the entrapment of articles in the sealed portion can be detected even when the inexpensive horizontal-direction pressing mechanism 56, which does not itself perceive the force/moment or the like exerted on the tubular film Fc, is used in order to apply pressure to the tubular film Fc between the sealing jaws 51.
(4-5) In the bag making and packaging machine 3 according to the present embodiment, the first rotating shaft 53a support the sealing jaw 51a at the first-end-part side (the right-end side) and the second-end-part side (the left-end side) in the longitudinal direction (the left-right direction) of the sealing surface 511a with which the sealing jaw 51a sandwiches the tubular film Fc. The second rotating shaft 53b supports the sealing jaw 51b at the first-end-part side (the right-end side) and the second-end-part side (the left-end side) in the longitudinal direction (the left-right direction) of the sealing surface 511b with which the sealing jaw 51b sandwiches the tubular film Fc. One rotary encoder 40 measures the first relative movement amount of the first rotating shaft 53a in relation to the second rotating shaft 53b at the first-end-part side (the right-end side) (in the present embodiment, the movement amount of the right-side-end part of the first rotating shaft 53a relative to the second rotating shaft 53b (the right-side movement amount)). The other rotary encoder 40 measures the second relative movement amount of the first rotating shaft 53a in relation to the second rotating shaft 53b at the second-end-part side (the left-end side) (in the present embodiment, the movement amount of the left-side-end part of the first rotating shaft 53a relative to the second rotating shaft 53b (the left-side movement amount)). The entrapment determination part 30a determines whether or not articles are present in the sealed portion based on the right-side movement amount and the left-side movement amount.
   Here, because the relative movement amounts (the right-side movement amount and the left-side movement amount) of the first rotating shaft 53a in relation to the second rotating shaft 53b, in the left and right end parts of the first rotating shaft 53a, are used in the determination of the presence of trapped articles, it is easy to perceive that articles have been trapped regardless of the location in which they have been trapped in the sealed portion of the tubular film Fc.
   For example, there could be a configuration with one rotary encoder 40, wherein only the movement amount of the right-side-end part of the first rotating shaft 53a relative to the second rotating shaft 53b (the right-side movement amount) is measured. In this case, if articles got trapped near the left-side-end part of the sealed portion of the tubular film Fc, the right-side-end part of the first rotating shaft 53a would not move by much relative to the second rotating shaft 53b (i.e. the difference in movement amount from that of a case when no articles are trapped would not be notable). However, because both the left-side movement amount and the right-side movement amount are measured by two rotary encoders 40, it is easy to accurately determine that articles have been trapped.
   However, the configuration is not limited to this example, and only the left-side movement amount or only the right-side movement amount may be measured by a rotary encoder 40. For example, in cases such as when it is unlikely a difference between the left-side movement amount and the right-side movement amount to be caused (e.g., when the longitudinal widths of the sealing surfaces 511a, 511b are comparatively small), the entrapment of articles can be accurately determined even if only the left-side movement amount or only the right-side movement amount is measured by a rotary encoder 40.
(4-6) In the bag making and packaging machine 3 according to the present embodiment, the entrapment determination part 30a determines whether or not articles are present in the sealed portion based on the statistics of the relative movement amount (the movement amount of the first rotating shaft 53a relative to the second rotating shaft 53b in this case) measured during a predetermined time period (the time periods X1, X2 in the present embodiment) by the rotary encoders 40. Particularly, the entrapment determination part 30a in this case determines whether or not articles are present in the sealed portion based on the average value of the movement amount of the first rotating shaft 53a relative to the second rotating shaft 53b, measured during the time periods X1, X2 by the rotary encoders 40.
   Here, erroneous detection of the presence of articles is hardly caused, even if there is momentarily a comparatively large measurement error in the relative movement amount of the first rotating shaft 53a in relation to the second rotating shaft 53b, measured by the rotary encoders 40.
(4-7) In the bag making and packaging machine 3 according to the present embodiment, the pair of sealing jaws 51 sandwich the tubular film Fc conveyed in the first direction (downward in this case) and laterally seal the film along a direction (the left-right direction in this case) intersecting the first direction sequentially from the forward side in the first direction, due to the sealing jaws 51a, 51b being rotated along a circular orbit. Within one sealing action by the sealing jaws 51, the entrapment determination part 30a determines whether or not articles are present in the sealed portion in the time period X1 (an example of the first time period), which begins at the point in time when the sealing action by the sealing jaws 51a, 51b is started and ends at the point in time when cutting of the tubular film Fc by the knife 72a arranged to the sealing jaw 51b is started (an example of the first time point). Additionally, within one sealing action by the sealing jaws 51, the entrapment determination part 30a determines whether or not articles are present in the time period X2 (an example of the second time period), which begins at the point in time when cutting of the tubular film Fc by the knife 72a arranged to the sealing jaw 51b is finished (an example of the second time point), and ends at the point in time when the sealing action by the sealing jaws 51a, 51b is finished.
   In the bag making and packaging machine 3 using a rotating lateral sealing mechanism, the determination of the presence of trapped articles is performed separately at the sealing action starting time and the sealing action finishing time, within one sealing action. Therefore, when bags are being packaged continuously, a determination of the presence of articles of one-end side (the upper-end side during lateral sealing) of one bag B and a determination of the presence of articles of the other-end side (the lower-end side during lateral sealing) of the following bag B can be performed separately. It is thereby easy to expel only bags B in which presence of articles is actually caused as defective products.
   The configuration is not limited to this example, and the occurrence of the presence of articles trapped in the sealed portion may be determined for the entire sealing action. However, in order to expel only bags B in which the presence of trapped articles results in defective products, it is preferable to determine whether or not articles are present in the sealed portion separately in the time period X1 and the time period X2 as described above.
(4-8) In the bag making and packaging machine 3 according to the present embodiment, the second rotating shaft 53b is secured so as not to move either toward or away from the first rotating shaft 53a. The first rotating shaft 53a is movable toward or away from the second rotating shaft 53b. The rotary encoders 40 measure the movement amount of the first rotating shaft 53a in the direction toward or away from the second rotating shaft 53b as the relative movement amount when the first rotating shaft 53a moves toward or away from the second rotating shaft 53b.
   Here, because only the first rotating shaft 53a can move toward or away from the second rotating shaft 53b and occurrence of presence of articles trapped in the sealed portion is determined by detecting the movement amount, the relative movement amount of the first rotating shaft 53a in relation to the second rotating shaft 53b can be measured with a simple configuration to detect the presence of trapped articles.
(4-9) Conventionally, alignment adjustment of the sealing jaws 51 is done by using a thickness gauge. In the bag making and packaging machine 3 according to the present embodiment, alignment adjustment of the sealing jaws 51 can be done based on the measurement result of the left-side movement amount and the right-side movement amount by the rotary encoders 40. Therefore, it is possible to perform alignment adjustment of the sealing jaws 51 with little variation in a short time.
(4-10) By using the movement amount of the first rotating shaft 53a relative to the second rotating shaft 53b measured by the rotary encoders 40, it is possible to detect dirt on the sealing jaws 51 as well as to detect whether or not articles are present in the sealed portion.

When the sealing jaws 51 are dirty, the distance between the sealing surface 511a and the sealing surface 511b decrease commensurately with respect to the amount of dirt adhesion than when there is no dirt, and the force with which the sealing jaw 51b presses the sealing jaw 51a becomes greater than when there is no dirt. As a result, the movement amount of the first rotating shaft 53a relative to the second rotating shaft 53b in a case when the sealing jaws 51 are dirty becomes greater than in a case when the sealing jaws 51 are not dirty. Therefore, by perceiving the movement amount of the first rotating shaft 53a relative to the second rotating shaft 53b and comparing this amount with, e.g., the movement amount in cases of no dirt, dirt on the sealing jaws 51 can be detected and instances of sealing strength being insufficient due to dirt on the sealing jaws 51 can be prevented.

### (5) Modifications

Modifications of the present embodiment are presented below. The modifications may be combined as appropriate as long as they do not contradict each other.

### (5-1) Modification A

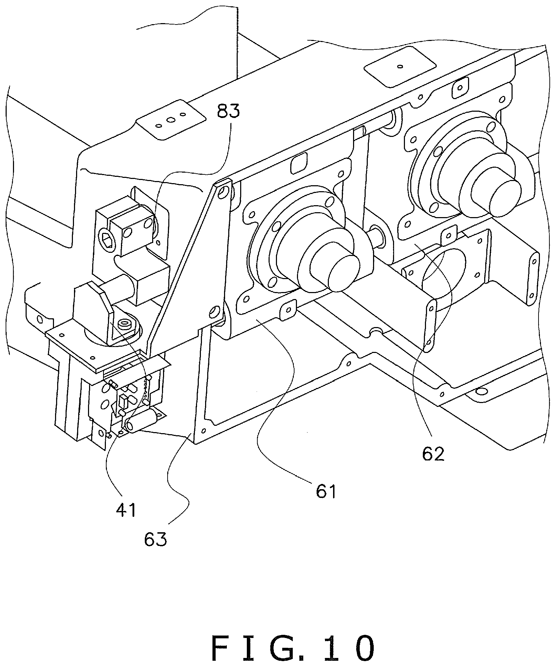

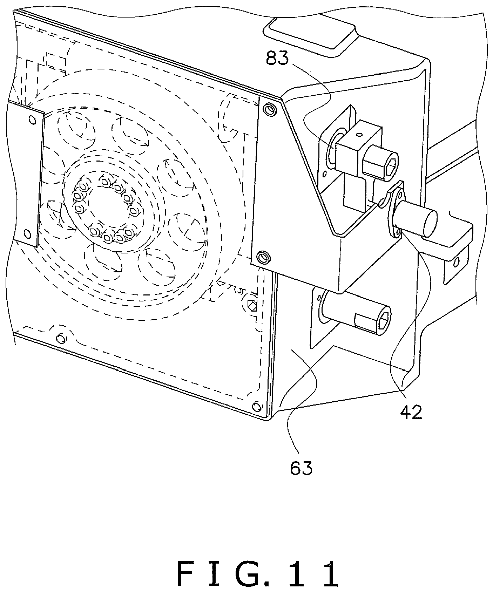

In the above embodiment, the bag making and packaging machine 3 utilizes the rotary encoders 40 as movement amount detectors, but such an arrangement is not provided by way of limitation. Other movement amount detectors may be attached to the ends of the second linking rods 83 and be capable of measuring the amount of displacement of the second linking rods 83. For example, load cells 41 may be attached to the ends of the second linking rods 83 as shown in FIG. 10, and the strength of the force exerted on the load cells 41 may be used to measure the amount of displacement of the second linking rods 83. Additionally, for example, potentiometers 42 may be attached to the ends of the second linking rods 83 as shown in FIG. 11, and the change in resistance value may be used to measure the amount of displacement of the second linking rods 83.

The results of inspection using real machinery indicates, among rotary encoders, load cells, and potentiometers, that rotary encoders are comparatively superior in terms of performance, and potentiometers are comparatively superior in terms of cost.

### (5-2) Modification B

In the above embodiment, the movement amount of the second linking rods 83 is measured at the ends of the second linking rods 83, whereby the movement amount of the first rotating shaft 53a relative to the second rotating shaft 53b is measured, but no limitation is provided thereby. The movement amount of the first rotating shaft 53a relative to the second rotating shaft 53b may be measured by arranging the rotary encoders 40 or other movement amount detectors to portions of the second linking rods 83 where they are attachable other than the ends, and measuring the movement amount of the second linking rods 83 at those positions. The movement amount of the first rotating shaft 53a relative to the second rotating shaft 53b may be measured by directly measuring the movement amount of the first rotating shaft 53a itself rather than measuring the movement amount of the second linking rods 83.

### (5-3) Modification C

In the above embodiment, the presence of trapped articles during lateral sealing is determined in the bag making and packaging machine 3 using a rotating lateral sealing mechanism, but no limitation is provided thereby.

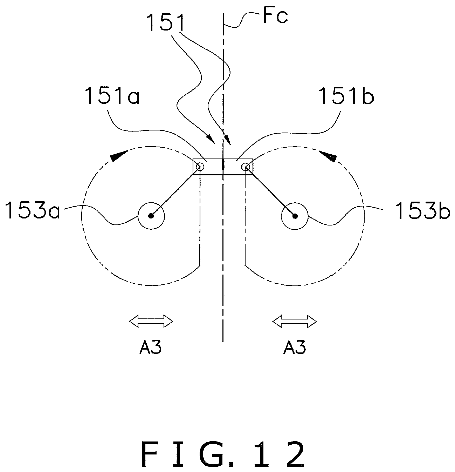

For example, the entrapment of articles may be determined with a configuration similar to that of the above embodiment, in a packaging machine using a lateral sealing mechanism in which a sealing jaw 151a is revolvably driven in a D-shaped path in a side view by a first revolving shaft 153a as an example of the first support part, and a sealing jaw 151b is revolvably driven in a D-shaped path in a side view by a second revolving shaft 153b as an example of the second support part, whereby the tubular film Fc is sandwiched and laterally sealed between the pair of sealing jaws 151, as shown in FIG. 12.

In this case, the first revolving shaft 153a and the second revolving shaft 153b are revolvably driven in a D-shaped path in a side view, by moving the first revolving shaft 153a and the second revolving shaft 153b toward or away from each other while rotating (refer to the arrows A3 in FIG. 12). In other words, the first revolving shaft 153a and the second revolving shaft 153b are both capable of moving toward or away from the other. Therefore, the movement amount detectors in this case are configured so as to measure the movement amounts of both revolving shafts 153a, 153b by using rotary encoders or the like, and to calculate the relative movement amount of the first revolving shaft 153a in relation to the second revolving shaft 153b.

For example, in a packaging machine in which at least one of two sealing jaws is driven linearly toward the other and sandwich a film between the sealing jaws, the presence of trapped articles may be determined with a configuration similar to that of the above embodiment. In a case when one sealing jaw is driven so as to move toward or away from the other, a member supporting the one sealing jaw so that the sealing jaw is linearly driven, and a member supporting the other sealing jaw so that the other sealing jaw does not move, would be examples of the first support part and the second support part, respectively. In a case when both sealing jaws are driven so as to move toward or away from each other, members supporting the sealing jaws so that the sealing jaws are linearly driven would be examples of the first support part and the second support part.

### (5-4) Modification D

In the lateral sealing mechanism 17 according to the above embodiment, the sealing jaw 51a and the sealing jaw 52a are provided to the first rotating body 50a, the sealing jaw 51b and the sealing jaw 52b are provided to the second rotating body 50b, and the sealing jaw 51a and the sealing jaw 51b alternate with the sealing jaw 52a and the sealing jaw 52b to sandwich and laterally seal the tubular film Fc, but the invention is not limited to this configuration.

For example, in the bag making and packaging machine 3, the sealing jaw 51a alone may be provided to the first rotating body 50a, the sealing jaw 51b alone may be provided to the second rotating body 50b, and lateral sealing may be performed using the sealing jaws 51 alone. Additionally, for example, the bag making and packaging machine 3 may have three or more groups of sealing jaws, and lateral sealing of the tubular film Fc may be performed using these groups of sealing jaws alternately.

### (5-5) Modification E

The entrapment determination part 30a according to the above embodiment determines whether or not articles are present in the sealed portion by calculating the average value of the movement amount of the first rotating shaft 53a relative to the second rotating shaft 53b measured during the time periods X1, X2, and comparing the average value with the maximum value Dmax of the movement amount of the first rotating shaft 53a relative to the second rotating shaft 53b in a case when no articles are present, but no limitation is provided thereby. For example, the entrapment determination part 30a may determine that articles are present in the sealed portion when the movement amount of the first rotating shaft 53a relative to the second rotating shaft 53b measured during the time periods X1, X2, includes an element that surpasses the maximum value Dmax. In this case, the entrapment determination part 30a can quickly determine whether or not articles are present in the sealed portion.

The entrapment determination part 30a may also determine whether or not articles are present in the sealed portion by calculating an intermediate value or another statistical value of the movement amount of the first rotating shaft 53a relative to the second rotating shaft 53b measured during the time periods X1, X2, and comparing this statistical value with the maximum value Dmax of the movement amount of the first rotating shaft 53a relative to the second rotating shaft 53b in a case when no articles are present.

The entrapment determination part 30a may also recognize the difference in the shapes of the graphs of the movement amount of the first rotating shaft 53a relative to the second rotating shaft 53b caused by the occurrence of the presence of trapped articles (see FIGS. 9(a) and 9(b)), and thereby determine whether or not articles are present in the sealed portion.

### (5-6) Modification F

In the above embodiment, the bag B is cut away from the tubular film Fc by the knife 72a arranged to the sealing jaw 51b or 52b and configured to protrude toward the sealing jaw 51a or 52a, but no limitation is provided thereby.

For example, a knife accommodated in a space formed in one sealing jaw 51 of a pair of sealing jaws 51 may be driven so as to move toward the other sealing jaw 51, and the bag B may thereby be cut away from the tubular film Fc. In this case as well, the occurrence of the entrapment of articles in the sealed portion can be determined based on the movement amount of the first rotating shaft 53a relative to the second rotating shaft 53b in a case when no articles are present in the sealed portion, and the movement amount of the first rotating shaft 53a relative to the second rotating shaft 53b measured by the rotary encoders 40 during the sealing action by the sealing jaws 51.

Another possible option is to not provide a knife 72a to the sealing jaw 51b or 52b, and to have the sealing jaws 51, 52 perform lateral sealing only (the bag B would not be cut).

### (5-7) Modification G

In the above embodiment, the bag making and packaging machine 3 is described as an example of the packaging machine according to the present invention, but the packaging machine according to the present invention is not limited as such. For example, the packaging machine may be designed so that it only includes the lateral sealing mechanism 17 portion of the bag making and packaging machine 3.

### INDUSTRIAL APPLICABILITY

In the packaging machine according to the present invention, sealing members sandwich and seal a packaging material. The packaging machine is useful for being capable of detecting when articles are present in a sealed portion even when the mechanism used as the drive source of the sealing members is incapable of perceiving the force/moment exerted on the packaging material by the drive source and positional information pertaining to the drive source, directly from information obtained from the drive source.

### REFERENCE SIGNS LIST

3 Bag making and packaging machine (packaging machine)
30a Entrapment determination part
40 Rotary encoder (movement amount detector)
41 Load cell (movement amount detector)
42 Potentiometer (movement amount detector)
51 (51a, 51b) Sealing jaw
52 (52a, 52b) Sealing jaw
151 (151a, 151b) Sealing jaw
53a First rotating shaft (first support part)
53b Second rotating shaft (second support part)
153a First revolving shaft (first support part)
153b Second revolving shaft (second support part)
56 Horizontal-direction pressing mechanism (fluid-pressure-utilizing pressing mechanism)
Fc Tubular film (film formed into tubular shape)

### CITATION LIST

### PATENT LITERATURE

[Patent Literature 1] Japanese Laid-open Patent Application No. 2007-302261
[Patent Literature 2] Japanese Laid-open Patent Application No. H3-69428

## Claims

1. A packaging machine (3) in which a pair of sealing members (51, 52) is configured to be rotated in a circular orbit, whereby the sealing members sandwich and laterally seal a sealed portion of a film along a direction intersecting a first direction, the film being formed into a tubular shape and conveyed in the first direction, the packaging machine comprising:
a first support part (53a) configured to support one of the sealing members;
a second support part (53b) configured to support the other of the sealing members; and
an entrapment determination part (30a) configured to determine whether or not articles are present in the sealed portion based on the relative movement amount;
wherein the first support part (53a) is movable in a direction toward or away from the second support part (53b);
**characterized by**
a movement amount detector configured to measure the relative movement amount of the first support part (53a) relative to the second support part (53b) in an approaching direction or a moving away direction, when the first support part and the second support part approach or move away;
wherein
the second support part (53b) is secured so as not to move in a direction toward or away from the first support part (53a); and
the movement amount detector is configured to measure the movement amount of the first support part (53a) in the direction toward or away from the second support part (53b) as the relative movement amount when the first support part moves toward or away from the second support part.

2. The packaging machine (3) according to claim 1, wherein
the first and second support parts (53a, 53b) are rotating shafts to rotate the sealing members (51, 52).

3. The packaging machine (3) according to claim 1 or 2, further comprising:
a fluid-pressure-utilizing pressing mechanism configured to constantly press the first support part (53a) toward the second support part (53b) so that the film is to be pressed between the sealing members (51, 52) when the film is sandwiched between the pair of sealing members.

4. The packaging machine (3) according to any of claims 1 to 3, wherein
each of the first and second support parts (53a, 53b) is configured to support the sealing member at a first-end side and a second-end side in the longitudinal direction of a surface with which the sealing members (51, 52) sandwich the film;
the movement amount detector is configured to measure, as the relative movement amount, a first relative movement amount of the first support part (53a) in relation to the second support part (53b) at the first-end side, and a second relative movement amount of the first support part in relation to the second support part at the second-end side; and
the entrapment determination part (30a) is configured to determine whether or not articles are present in the sealed portion based on the first relative movement amount and the second relative movement amount.

5. The packaging machine (3) according to any of claims 1 to 4, wherein
the entrapment determination part (30a) is configured to determine whether or not articles are present in the sealed portion based on statistics of the relative movement amount measured during a predetermined time period by the movement amount detector.

6. The packaging machine (3) according to claim 5, wherein
the entrapment determination part (30a) is configured to determine whether or not articles are present in the sealed portion based on an average value of the relative movement amount measured during the predetermined time period by the movement amount detector.

7. The packaging machine (3) according to claim 1, wherein
the pair of sealing members (51, 52) are configured to be rotated in a circular orbit, whereby the sealing members sandwich and laterally seal the film along a direction intersecting a first direction sequentially from the forward side in the first direction, the film being formed into a tubular shape and conveyed in the first direction; and
the entrapment determination part (30a) is configured to determine whether or not articles are present in the sealed portion, both in a first time period beginning at a start of a sealing action by the sealing members (51, 52) and ending at a first time point and in a second time period beginning at a second time point after the first time point and ending at a finish of the sealing action, within the single sealing action.

## Patentansprüche

1. Verpackungsmaschine (3), in der ein Paar von Versiegelungselementen (51, 52) konfiguriert ist, in einer kreisförmigen Umlaufbahn gedreht zu werden, wodurch die Versiegelungselemente einen versiegelten Abschnitt eines Films längs einer Richtung, die eine erste Richtung schneidet, zwischen sich nehmen und lateral versiegeln, wobei der Film in einer Röhrenform ausgebildet ist und in die erste Richtung befördert wird, wobei die Verpackungsmaschine aufweist:
einen ersten Halteteil (53a), der konfiguriert ist, eines der Versiegelungselemente zu halten;
einen zweiten Halteteil (53b), der konfiguriert ist, das andere der Versiegelungselemente zu halten; und
einen Einschlussfeststellungsteil (30a), der konfiguriert ist, beruhend auf dem Relativbewegungsbetrag festzustellen, ob im versiegelten Abschnitt Artikel vorhanden sind;
wobei der erste Halteteil (53a) in eine Richtung zum zweiten Halteteil (53b) hin oder von ihm weg beweglich ist;
**gekennzeichnet durch**
einen Bewegungsbetragdetektor, der konfiguriert ist, den Relativbewegungsbetrag des ersten Halteteils (53a) relativ zum zweiten Halteteil (53b) in eine Annäherungsrichtung oder eine Wegbewegungsrichtung zu messen, wenn sich der erste Halteteil und der zweite Halteteil aneinander annähern oder sich voneinander weg bewegen;
wobei
der zweite Halteteil (53b) so befestigt ist, dass er sich nicht in eine Richtung zum ersten Halteteil (53a) hin oder von ihm weg bewegt; und
der Bewegungsbetragdetektor konfiguriert ist, den Bewegungsbetrag des ersten Halteteils (53a) in die Richtung zum zweiten Halteteil (53b) hin oder von ihm weg als den Relativbewegungsbetrag zu messen, wenn der sich erste Halteteil zum zweiten Halteteil hin oder von ihm weg bewegt.

2. Verpackungsmaschine (3) nach Anspruch 1, wobei
der erste und zweite Halteteil (53a, 53b) Drehwellen sind, um die Versiegelungselemente (51, 52) zu drehen.

3. Verpackungsmaschine (3) nach Anspruch 1 oder 2, die ferner aufweist:
einen fluiddrucknutzenden Druckmechanismus, der konfiguriert ist, den ersten Halteteil (53a) konstant zum zweiten Halteteil (53b) zu drücken, so dass der Film zwischen den Versiegelungselementen (51, 52) gepresst wird, wenn der Film zwischen das Paar der Versiegelungselemente genommen wird.

4. Verpackungsmaschine (3) nach einem der Ansprüche 1 bis 3, wobei
jedes des ersten und zweiten Halteteils (53a, 53b) konfiguriert ist, das Versiegelungselement in die Längsrichtung einer Oberfläche, mit der die Versiegelungselemente (51, 52) den Film zwischen sich nehmen, auf einer ersten Endseite und einer zweiten Endseite zu halten;
der Bewegungsbetragdetektor konfiguriert ist, als den Relativbewegungsbetrag einen ersten Relativbewegungsbetrag des ersten Halteteils (53a) in Bezug auf den zweiten Halteteil (53b) auf der ersten Endseite und einen zweiten Relativbewegungsbetrag des ersten Halteteils in Bezug auf den zweiten Halteteil auf der zweiten Endseite zu messen; und
der Einschlussfeststellungsteil (30a) konfiguriert ist, beruhend auf dem ersten Relativbewegungsbetrag und dem zweiten Relativbewegungsbetrag festzustellen, ob im versiegelten Abschnitt Artikel vorhanden sind.

5. Verpackungsmaschine (3) nach einem der Ansprüche 1 bis 4, wobei
der Einschlussfeststellungsteil (30a) konfiguriert ist, beruhend auf einer Statistik des während einer vorgegebenen Zeitspanne durch den Bewegungsbetragdetektor gemessenen Relativbewegungsbetrags festzustellen, ob im versiegelten Abschnitt Artikel vorhanden sind.

6. Verpackungsmaschine (3) nach Anspruch 5, wobei
der Einschlussfeststellungsteil (30a) konfiguriert ist, beruhend auf einem Durchschnittswert des während der vorgegebenen Zeitspanne durch den Bewegungsbetragdetektor gemessenen Relativbewegungsbetrag festzustellen, ob im versiegelten Abschnitt Artikel vorhanden sind.

7. Verpackungsmaschine (3) nach Anspruch 1, wobei
das Paar der Versiegelungselemente (51, 52) konfiguriert ist, in einer kreisförmigen Umlaufbahn gedreht zu werden, wodurch die Versiegelungselemente längs einer Richtung, die eine erste Richtung schneidet, den Film in die erste Richtung aufeinanderfolgend von der Vorderseite zwischen sich nehmen und lateral versiegeln, wobei der Film in einer Röhrenform ausgebildet ist und in die erste Richtung befördert wird; und
der Einschlussfeststellungsteil (30a) konfiguriert ist, sowohl in einer ersten Zeitspanne, die beim Start eines Versiegelungsvorgangs durch die Versiegelungselemente (51, 52) beginnt und an einem ersten Zeitpunkt endet, als auch in einer zweiten Zeitspanne, die an einem zweiten Zeitpunkt nach dem ersten Zeitpunkt beginnt und beim Abschluss des Versiegelungsvorgangs endet, innerhalb des einzelnen Versiegelungsvorgangs festzustellen, ob im versiegelten Abschnitt Artikel vorhanden sind.

## Revendications

1. Machine de conditionnement (3) où une paire d'éléments de scellage (51, 52) est prévue pour subir une rotation sur une orbite circulaire, les éléments de scellage enserrant et scellant latéralement une partie à sceller d'un film le long d'une direction croisant une première direction, le film étant de forme tubulaire et transporté dans la première direction, ladite machine de conditionnement comprenant :
une première section de support (53a) prévue pour supporter un des éléments de scellage ;
une deuxième section de support (53b) prévue pour supporter l'autre élément de scellage ; et
une section de détermination d'inclusion (30a) prévue pour déterminer si des articles sont présents ou non dans la partie à sceller sur la base de la valeur de valeur de déplacement relatif ;
la première section de support (53a) étant déplaçable dans une direction d'avance vers la deuxième section de support (53b), ou d'éloignement de celle-ci ;
**caractérisée par**
un détecteur de valeur de déplacement prévu pour mesurer la valeur de déplacement relatif de la première section de support (53a) par rapport à la deuxième section de support (53b) dans une direction d'approche ou une direction d'éloignement, quand la première section de support et la deuxième section de support avancent ou s'éloignent ;
la deuxième section de support (53b) étant fixée de manière à ne pas se mouvoir dans une direction d'avance vers la première section de support (53a), ou d'éloignement de celle-ci ; et
le détecteur de valeur de déplacement étant prévu pour mesurer la valeur de déplacement de la première section de support (53a) dans la direction d'avance vers la deuxième section de support (53b), ou d'éloignement de celle-ci, en tant que valeur de déplacement relatif, quand la première section de support avance vers la deuxième section de support, ou s'éloigne de celle-ci.

2. Machine de conditionnement (3) selon la revendication 1, où la première et la deuxième sections de support (53a, 53b) sont des arbres rotatifs entraînant les éléments de scellage (51, 52) en rotation.

3. Machine de conditionnement (3) selon la revendication 1 ou la revendication 2, comprenant en outre :
un mécanisme de serrage par pression de fluide prévu pour serrer de manière continue la première section de support (53a) vers la deuxième section de support (53b), de manière à comprimer le film entre les éléments de scellage (51, 52) quand le film est enserré entre les deux éléments de scellage.

4. Machine de conditionnement (3) selon l'une des revendications 1 à 3, où
la première ainsi que la deuxième sections de support (53a, 53b) sont prévues pour supporter l'élément de scellage sur un premier côté d'extrémité et un deuxième côté d'extrémité dans la direction longitudinale d'une surface avec laquelle les éléments de scellage (51, 52) enserrent le film ;
le détecteur de valeur de déplacement est prévu pour mesurer en tant que valeur de déplacement relatif une première valeur de déplacement relatif de la première section de support (53a) par rapport à la deuxième section de support (53b) sur le premier côté d'extrémité, et une deuxième valeur de déplacement relatif de la première section de support par rapport à la deuxième section de support sur le deuxième côté d'extrémité ; et
la section de détermination d'inclusion (30a) est prévue pour détermine si des articles sont présents ou non dans la partie à sceller sur la base de la première valeur de déplacement relatif et de la deuxième valeur de déplacement relatif.

5. Machine de conditionnement (3) selon l'une des revendications 1 à 4, où
la section de détermination d'inclusion (30a) est prévue pour déterminer si des articles sont présents ou non dans la partie à sceller sur la base de statistiques de la valeur de déplacement relatif mesurée pendant une période définie par le détecteur de valeur de déplacement.

6. Machine de conditionnement (3) selon la revendication 5, où
la section de détermination d'inclusion (30a) est prévue pour déterminer si des articles sont présents ou non dans la partie à sceller sur la base d'une valeur moyenne de la valeur de déplacement relatif mesurée pendant la période définie par le détecteur de valeur de déplacement.

7. Machine de conditionnement (3) selon la revendication 1, où
la paire d'éléments de scellage (51, 52) est prévue pour subir une rotation sur une orbite circulaire, les éléments de scellage enserrant ainsi et scellant latéralement le film le long d'une direction croisant une première direction, séquentiellement depuis le côté avant dans la première direction, le film étant de forme tubulaire et transporté dans la première direction ; et
la section de détermination d'inclusion (30a) est prévue pour déterminer si des articles sont présents ou non dans la partie à sceller, lors d'une première période partant du début d'une opération de scellage par les éléments de scellage (51, 52) et se terminant à un premier moment, et lors d'une deuxième période partant d'un deuxième moment ultérieur au premier moment et se terminant à la fin de l'opération de scellage, pendant l'opération de scellage individuelle.
